# EUROPÄISCHE PATENTANMELDUNG

(11) **EP 4 378 879 A1**
(43) Veröffentlichungstag der Anmeldung: **05.06.2024**
(21) Anmeldenummer: 23210825.8
(22) Anmeldetag: 20.11.2023
(51) Int. Cl.: B67C 7/00, B65C 9/02, B08B 13/00, B65B 3/00, B65G 47/86, B67B 3/26, G01N 21/90, B65B 57/00, B65C 9/40, B67C 3/00

(54) **BEHÄLTERBEHANDLUNGSANLAGE UND VERFAHREN ZUM BEHANDELN VON BEHÄLTERN**

(30) Priorität: 29.11.2022 DE 102022131452
(71) Anmelder: KHS GmbH, 44143 Dortmund (DE)
(72) Erfinder: Fritsche, Claas, 44143 Dortmund (DE); Becker-Schmacht, Kevin, 53501 Grafschaft (DE); Lewin, Frank, 22889 Tangstedt (DE); Krieg, Andreas, 67596 Dittelsheim-Hessloch (DE)

(57) **Zusammenfassung**

Die Erfindung betrifft eine Behälterbehandlungsanlage (1000) mit mehreren aufeinanderfolgenden Anlageabschnitten (100, 200, 300). Dabei weist die Behälterbehandlungsanlage (1000) einen Behandlungsabschnitt (200) zum Behandeln von Behältern (10) und einen Abführungsabschnitt (300) zum Abführen der Behälter (10) von dem Behandlungsabschnitt (200) auf. Der Behandlungsabschnitt (200) weist mindestens eine Behälterbehandlungsvorrichtung (210) auf, wobei die mindestens eine Behälterbehandlungsvorrichtung (210) eine Vielzahl von ersten Halteeinrichtungen (211) zum separaten Halten von einzelnen Behältern (10) aufweist. Ferner weist der Abführungsabschnitt (300) eine Transportvorrichtung (310) auf, die eine Vielzahl von zweiten Halteeinrichtungen (311) zum separaten Halten von einzelnen Behältern (10) aufweist, wobei die zweiten Halteeinrichtungen (311) dazu ausgebildet sind, einzelne Behälter (10) von der Vielzahl der ersten Halteeinrichtungen (211) separat zu übernehmen. Weiterhin weist der Abführungsabschnitt (300) mindestens eine Inspektionseinrichtung (320) auf.

Ferner betrifft die Erfindung ein zugehöriges Verfahren zum Behandeln von Behältern (10).

## Beschreibung

### Technisches Gebiet

Die Erfindung betrifft eine Behälterbehandlungsanlage mit mehreren aufeinanderfolgenden Anlageabschnitten. Dabei ist ein Anlageabschnitt als Behandlungsabschnitt zum Behandeln der Behälter ausgebildet. Weiterhin ferner ist ein Abführungsabschnitt zum Abführen der Behälter ausgebildet. Ferner betrifft die Erfindung ein Verfahren zum Behandeln von Behältern.

### Stand der Technik

In der Getränkeindustrie sind Behälterbehandlungsvorrichtungen unterschiedlichster Art und für unterschiedlichste Zwecke bekannt. Beispielsweise sind Füllmaschinen, auch Füller genannt, bekannt, in welchen Behälter, wie Flaschen oder dergleichen, entlang einer Transportrichtung mit Halte- und Transportelementen transportiert werden. Die Behälter werden dann mittels als Füllorganen ausgebildeten Behandlungseinrichtungen mit einem Produkt befüllt. Dem Füller können weitere Behandlungsvorrichtungen, wie Rinser, Etikettiermaschinen, oder Verschließer usw. vor- oder nachgeschaltet sein. Gemeinsam bilden die Behälterbehandlungsvorrichtungen einen Behandlungsabschnitt in einer Behälterbehandlungsanlage. Vor dem Behandlungsabschnitt ist ein Zuführungsabschnitt zum Zuführen von Behältern und hinter dem Behandlungsabschnitt ist ein Abführungsabschnitt zum Abführen von Behältern angeordnet. Üblicherweise werden die Zuführungsabschnitte und Abführungsabschnitte von Förderbändern ausgebildet, die ein loses Zuführen und Abführen der Behälter ermöglichen.

In dem Behandlungsabschnitt oder in dem Abführungsabschnitt sind häufig Inspektionseinrichtungen angeordnet, um zu Zwecken der Qualitätskontrolle oder auch zu anderen Zwecken Inspektionen der behandelten Behälter durchzuführen. Wenn mittels der Inspektionseinrichtung ein fehlerhafter Behälter erkannt worden ist, kann es notwendig sein, dass die Behandlungseinheit bzw. der Teil der Behandlungsvorrichtung ausfindig gemacht wird, der den Behälter behandelt hat. Dafür ist bei einer in dem Abführungsabschnitt angeordneten Inspektionseinrichtung eine Nachverfolgung nötig.

Hierzu sind im Stand der Technik Verfahren entwickelt worden. Beispielsweise ist es aus der WO 2008 104 273 A1 bekannt, im Rahmen einer Analyse mittels einer Geschwindigkeit der Behälter und einem Zeitpunkt einer optischen Bildaufnahme eine Behandlungsanlage zu ermitteln. Weil der Zeitpunkt der optischen Bildaufnahme bekannt ist und auch die Geschwindigkeit des Behälters durch die Flaschenbehandlungsanlage bzw. deren einzelne Behandlungsanlagen (Füllanlage, Verschliessanlage, Etikettieraggregat usw.) bekannt ist, können Rückschlüsse auf den oder die Verursacher für etwaige Anomalien gezogen werden.

Die bekannten Verfahren zum Nachverfolgen der Behälter im Rahmen einer Inspektion sind jedoch aufwendig.

### Darstellung der Erfindung

Der Erfindung liegt daher die Aufgabe zugrunde, eine Behälterbehandlungsanlage und ein Verfahren zum Behandeln von Behältern anzugeben, die die oben genannten Probleme und Nachteile des Standes der Technik ausräumen. Insbesondere ist es Aufgabe der vorliegenden Erfindung, eine Behälterbehandlungsanlage und ein Verfahren zum Behandeln von Behältern anzugeben, die eine sichere und einfache Inspektion ermöglichen.

Diese Aufgabe wird durch die Gegenstände der unabhängigen Ansprüche gelöst. Weitere mögliche Ausgestaltungen der Erfindung sind insbesondere in den abhängigen Ansprüchen angegeben.

Die erfindungsgemäße Lösung besteht insbesondere darin, eine Behälterbehandlungsanlage mit mehreren aufeinanderfolgenden Anlageabschnitten anzugeben. Dabei weist die Behälterbehandlungsanlage einen Behandlungsabschnitt zum Behandeln der Behälter und einen Abführungsabschnitt zum Abführen der Behälter von dem Behandlungsabschnitt auf. Weiterhin weist der Behandlungsabschnitt mindestens eine Behälterbehandlungsvorrichtung auf. Vorzugsweise weist der Behandlungsabschnitt eine Vielzahl von Behälterbehandlungsvorrichtungen auf. Die mindestens eine Behälterbehandlungsvorrichtung weist eine Vielzahl von ersten Halteeinrichtungen zum separaten Halten von einzelnen Behältern auf. Erfindungsgemäß weist der Abführungsabschnitt eine Transportvorrichtung auf, die eine Vielzahl von zweiten Halteeinrichtungen zum separaten Halten von einzelnen Behältern aufweist. Dabei sind die zweiten Halteeinrichtungen dazu ausgebildet, einzelne Behälter von der Vielzahl der ersten Halteeinrichtungen separat zu übernehmen. Erfindungsgemäß weist der Abführungsabschnitt mindestens eine insbesondere optische Inspektionseinrichtung auf. Die Behälter werden mittels der zweiten Halteeinrichtungen an der optische, haptische oder mechanische Inspektionseinrichtung vorbeigeführt. Generell wäre es auch möglich, eine mechanische Prüfung durchzuführen. Diese könnte eine Squeezer Einrichtung oder auch nur eine Prüfung einer Geometrie beinhalten. Zum Beispiel könnte durch einen mechanischen Taster geprüft werden, ob sich ein Behälter in einer vorgesehen Position befindet

Beispielsweise kann die Behälterbehandlungsvorrichtung eine Behälterherstellungsmaschine, einen Rinser, eine Etikettiermaschine, einen Füller, einen Verschließer und/oder eine Verpackungsmaschine für die Behälter umfassen. Besonders bevorzugt ist die Behälterbehandlungsanlage insbesondere dazu ausgebildet, ein fließfähiges Produkt, insbesondere ein Getränk in die Behälter abzufüllen, und die befüllten Behälter nachfolgend zu verschließen. Dann umfassen die Behälterbehandlungsvorrichtungen beispielsweise einen Füller und einen Verschließer.

Bevorzugt sind Behälter einstückig oder aus mehreren fest miteinander verbundenen Teilen gebildet. Besonders bevorzugt weist jeder Behälter im Inneren einen Hohlraum auf und ist dazu ausgebildet, diesen Hohlraum von der Umgebung abzutrennen. Bei den Behältern kann es sich beispielsweise um Behälter zur Aufbewahrung von Lebensmitteln und/oder von flüssigen, viskosen oder pastösen Substanzen handeln. Bevorzugt sind Behälter Flaschen, Dosen, Tuben, oder dergleichen.

Die Behälter sind voneinander separierbar und können somit einzeln gehalten werden. Vor oder in dem Behandlungsabschnitt werden die Behälter voneinander separiert und in der Behälterbehandlungsvorrichtung getrennt voneinander gehalten und transportiert. Hierzu weist die mindestens eine Behälterbehandlungsvorrichtung die Vielzahl von ersten Halteeinrichtungen zum separaten Halten von einzelnen Behältern auf. Der getrennte Transport der Behälter wird im Gegensatz zu dem bekannten Stand der Technik nach dem Behandlungsabschnitt nicht aufgegeben, sondern auch in dem Abführungsabschnitt beibehalten. Hierzu weist der Abführungsabschnitt die Transportvorrichtung mit der Vielzahl von zweiten Halteeinrichtungen zum separaten Halten von einzelnen Behältern auf.

Die Behälter werden einzeln von einer der ersten Halteeinrichtungen an eine der zweiten Halteeinrichtungen übergeben. Daher wird der getrennte Transport der Behälter aus dem Behandlungsabschnitt in dem Abführungsabschnitt durchgängig beibehalten.

Bei den ersten und zweiten Halteeinrichtungen kann es sich allgemein um jede Halteeinrichtung handeln, die zum separaten Halten von Behältern geeignet ist.

Die Halteeinrichtungen können die Behälter beispielsweise Greifen oder Umschließen. Die Halteinrichtungen können zum mechanischen, pneumatischen oder magnetischen Halten ausgebildet sein. Der Antrieb der mechanischen Halteeinrichtung kann mechanisch, pneumatisch oder elektrisch erfolgen. Üblicherweise wird bei der mechanischen Halteeinrichtung mittels eines Greifers als Einfinger-, Zweifinger- oder Mehrfingergreifer gegriffen. Pneumatische Halteeinrichtungen halten ebenflächige Teile im Saugprinzip oder Klemmen im Druckprinzip.

Vorzugsweise ist die Inspektionseinrichtung als optische Inspektionseinrichtung ausgebildet. Eine optische Inspektionseinrichtung weist beispielsweise mindestens eine Bilderfassungseinrichtung auf und ist mit einem Bildverarbeitungssystem verbunden oder verbindbar. Beispielsweise können mittels des Bildverarbeitungssystems durch ein Abgleichen mit hinterlegten Daten, insbesondere Bilddaten, Abweichungen der Behälter von einem definierten Sollzustand festgestellt werden.

Die insbesondere optische Inspektionseinrichtung kann beispielsweise dazu ausgebildet sein, den Sitz, die Lage und/oder die Anbringung von zusätzlichen Elementen, wie beispielsweise Verschlüssen, Etiketten und dergleichen, an dem Behälter zu inspizieren.

Weiterhin kann die insbesondere optische Inspektionseinrichtung dazu ausgebildet sein, das Vorhandensein, den Füllstand, die Zusammensetzung oder die Farbe des eingefüllten Füllguts, beispielsweise einer Flüssigkeit, zu inspizieren.

Weiterhin beispielsweise kann die insbesondere optische Inspektionseinrichtung dazu ausgebildet sein, die Farbe von Etiketten oder Symbolen an dem Behälter oder dem Etikett zu inspizieren.

Weiterhin beispielsweise kann die insbesondere optische Inspektionseinrichtung dazu ausgebildet sein, die Farbe der Behälter, die Kontur oder die Gestalt des Behälters im Hinblick auf etwaige Unregelmäßigkeiten zu inspizieren. Solche Unregelmäßigkeiten lassen sich beispielsweise auf Beschädigungen, Fehlstellen im Behältermaterial, Risse oder Beulen zurückführen.

Ferner kann die Inspektionseinrichtung dazu ausgebildet sein, die Behälter hinsichtlich auf den Behältern aufgebrachten Symbole, Zeichen oder Kodierungen, Haltbarkeitsdaten etc. zu inspizieren.

Die Inspektionseinrichtung kann also ganz allgemein dazu ausgebildet sein, Behälterelemente, den Behälterinhalt und/oder den Behälter selbst zu inspizieren.

Die Inspektionseinrichtung kann auch dazu ausgebildet sein, nicht optisch inspizierbare Eigenschaften wie einen Behälterdruck, einen Verschluss-Drehmoment und/oder ein Gewicht eines Behälters zu inspizieren. Insbesondere dann kann die Inspektionseinrichtung weitere Sensoren, wie beispielsweise Gewichtssensoren oder Drucksensoren umfassen.

Vorzugsweise weist der Abführungsabschnitt mehrere Inspektionseinrichtungen auf. Dabei kann der Abführungsabschnitt insbesondere auch mehrere optische Inspektionseinrichtungen aufweisen. Weiterhin ist es denkbar, dass die Inspektionseinrichtung Behälter auch behandelt, beispielsweise bringt diese eine Codierung oder dergleichen an dem Behälter an.

Durch das separate Halten von einzelnen Behältern in dem Behandlungsabschnitt und in dem Abführungsabschnitt ist es möglich, den Behältern im Abführungsabschnitt einfach ihre zugehörige Position im Behandlungsabschnitt zuzuordnen. Hierdurch kann insbesondere die gesamte Inspektion in dem Abführungsabschnitt erfolgen und muss nicht aufwendig in den Behandlungsabschnitt integriert werden. Ferner ist es nicht mehr nötig, eine aufwendige und ungenaue Nachverfolgung der Behälter durchzuführen. Die Nachverfolgung kann durch die nie aufgehobene Trennung der Behälter sehr einfach ausgebildet werden.

Gemäß einer vorteilhaften Weiterbildung der Erfindung weist die Behälterbehandlungsanlage einen Zuführungsabschnitt zum Zuführen von Behältern zu dem Behandlungsabschnitt auf.

Die Behälter durchlaufen entlang eines Bewegungspfads die Behälterbehandlungsanlage. Dabei läuft der Behälter stromabwärts durch den Zuführungsabschnitt, durch den Behandlungsabschnitt und dann durch den Abführungsabschnitt. Der Behandlungsabschnitt ist also zwischen dem Zuführungsabschnitt und dem Abführungsabschnitt angeordnet.

Der Zuführungsabschnitt kann selbst eine Transportvorrichtung aufweisen oder mit einer Transportvorrichtung zum Zuführen von Behältern verbunden bzw. verbindbar sein. Die Transportvorrichtung kann hierbei insbesondere rotierender oder linearer Bauart sein. Besonders bevorzugt ist die Transportvorrichtung als Förderband ausgebildet.

In dem Zuführungsabschnitt müssen die Behälter nicht voneinander getrennt vorliegen. Vielmehr können die Behälter beispielsweise in einem mehrreihigen und insbesondere unsortierten Behälter-Strom vorliegen.

Gemäß einer vorteilhaften Weiterbildung der Erfindung weist die mindestens eine Behälterbehandlungsvorrichtung einen Transportstern auf. Der Transportstern ist um eine vertikale Sternachse rotierbar ist und weist die Vielzahl von ersten Halteeinrichtungen auf. Die Halteeinrichtungen sind hierbei vorzugsweise am Umfang des Transportstern verteilt ausgebildet.

Beispielsweise weist der Behandlungsabschnitt mehrere Behälterbehandlungsvorrichtungen auf. Dabei können zumindest einige, vorzugsweise alle, der Behälterbehandlungsvorrichtungen Transportsterne aufweisen.

Entlang und zwischen der Transportsterne werden die Behälter getrennt voneinander weitergegeben.

Die Transportsterne der einzelnen Behälterbehandlungsvorrichtungen sind hierbei im Stoffstrom hintereinander angeordnet. Die Transportsterne sind derart ausgebildet, dass einzelne Behälter an einem Übergabepunkt, an dem benachbarte Transportsterne aneinander angrenzen, von einem vorgeordneten auf einen nachgeordneten Transportstern übergebbar sind. Jeweils benachbarte Transportsterne rotieren dabei insbesondere gegenläufig, also in entgegengesetzten Drehrichtungen. Die Transportsterne können unterschiedlichen Durchmesser und/oder eine unterschiedliche Anzahl von Halteeinrichtungen aufweisen.

Insbesondere können die Transportsterne dazu ausgebildet sein, die Behälter, beispielsweise Flaschen, nicht stehend, sondern hängend zu transportieren. Hierzu ist an den zu transportierenden Behältern im Halsbereich, also spezifisch im Bereich des Flaschenhalses, ein Flansch ausgebildet. Die Halteeinrichtungen können dabei so ausgebildet und angeordnet sein, dass sie die Behälter am Flansch, insbesondere unterhalb des Flansches oder oberhalb des Flansches, greifen.

Eine vorteilhafte Weiterbildung der Erfindung sieht vor, dass die Transportvorrichtung derart endlos umlaufend ausgebildet ist, dass die zweiten Halteeinrichtungen entlang einer insbesondere geschlossenen Bahn bewegt werden.

Die Bahn ist vorzugsweise langgestreckt, beispielsweise zumindest im Wesentlichen ellipsenförmig ausgebildet. Besonders bevorzugt ist die Bahn nicht geometrisch kreisförmig ausgebildet.

Dabei ist die Bahn vorzugsweise als ebene Bahn ausgebildet. Die Halteeinrichtungen bewegen sich also entlang der Bahn auf einer zumindest im Wesentlichen gleichbleibenden Höhe.

Beispielsweise weisen die zweiten Halteeinrichtungen einen Grundkörper auf, der an einem umlaufenden Förderelement der Transportvorrichtung befestigbar bzw. befestigt ist. Weiterhin beispielsweise ist das umlaufende Förderelement als Kette ausgebildet.

Bei einer vorteilhaften Weiterbildung der Erfindung weisen die zweiten Halteeinrichtungen jeweils mindestens ein Greiferelement auf, das Greiferflächen zum Greifen genau eines Behälters aufweist, wobei das Greiferelement zwischen einer geschlossenen, den jeweiligen Behälter haltenden Stellung und einer geöffneten, den Behälter freigebenden Stellung bewegbar ausgebildet ist.

Vorzugsweise weisen die zweiten Halteeinrichtungen jeweils mindestens zwei Greiferelemente auf, die Greiferflächen zum Greifen genau eines Behälters aufweisen, wobei die Greiferelemente zwischen einer geschlossenen, den jeweiligen Behälter haltenden Stellung und einer geöffneten, den Behälter freigebenden Stellung bewegbar ausgebildet sind.

Die zweiten Halteeinrichtungen sind also zum selektiven Greifen genau eines Behälters ausgebildet.

Beispielsweise können die Behälter im Halsbereich gegriffen werden. Dies ist insbesondere dann vorteilhaft, wenn es sich bei den Behältern um Flaschen handelt. So können mittels der Greiferelemente die Behälter, beispielsweise Flaschen, hängend befördert werden. Die Greiferelemente sind hierbei insbesondere dazu ausgebildet, einen Flansch der Flaschen zu greifen. Die zweiten Halteeinrichtungen können dabei so ausgebildet und angeordnet sein, dass sie die Behälter am Flansch greifen.

Insbesondere wenn die Behälterbehandlungsvorrichtung einen Transportstern umfasst, können an einem Übergabepunkt, an dem der Transportstern und die Transportvorrichtung aneinander angrenzen, die Behälter einzeln von dem Transportstern an die Transportvorrichtung übergeben werden.

Beispielsweise sind die Greifelemente mit Gelenken an einem Grundkörper der zweiten Halteeinrichtung angeordnet. Der Grundkörper der zweiten Halteeinrichtung kann der Teil sein, der mit dem Transportelement der Transportvorrichtung verbunden oder verbindbar ausgebildet ist.

Eine vorteilhafte Weiterbildung der Erfindung sieht vor, dass die ersten Halteeinrichtungen und die zweiten Halteeinrichtungen derart ausgebildet sind, dass die Behälter beim Durchlaufen des Behandlungsabschnitts und des Abführungsabschnitts auf zumindest im Wesentlichen der gleichen, also einer konstanten, Höhe gehalten werden.

Es findet somit kein Höhenunterschied beim Transport der Behälter von dem Behandlungsabschnitt zu dem Abführungsabschnitt statt. Die Behälterbehandlungsanlage kann somit insgesamt kompakter ausgebildet sein und einen geringen Bauraum, insbesondere eine geringe Bauhöhe, aufweisen.

Bei einer vorteilhaften Weiterbildung der Erfindung weist der Abführungsabschnitt mindestens eine Dreheinrichtung auf, die dazu ausgebildet ist, gehaltene Behälter um eine Drehachse zu drehen.

Dabei kann die mindestens eine Dreheinrichtung beispielsweise derart im Abführungsabschnitt angeordnet sein, dass die zweiten Halteeinrichtungen beim Passieren der Dreheinrichtung gedreht werden oder die gehaltenen Behälter drehen. Dabei werden die Behälter vorzugsweise um einen vorbestimmten Drehwinkel, beispielsweise um 90° oder 180° gedreht. Weiterhin beispielsweise können drei Dreheinrichtungen hintereinander angeordnet sein, die die Behälter jeweils um 90° drehen.

Alternativ hierzu kann jede Halteeinrichtung selbst eine Dreheinrichtung aufweisen. Dann weisen die zweiten Halteeinrichtungen jeweils eine Dreheinrichtung auf, die dazu ausgebildet ist, den mittels der jeweiligen zweiten Halteeinrichtung gehaltenen Behälter um eine Drehachse zu drehen.

Unabhängig von der Ausführung handelt es sich bei der Drehachse insbesondere um die Längsachse oder eine parallel hierzu ausgerichtete Achse der Behälter. Allgemein kann die Dreheinrichtung dazu ausgebildet sein, den Behälter um mindestens 90°, vorzugsweise 180° zu drehen.

Gemäß einer vorteilhaften Weiterbildung der Erfindung sind die mindestens eine Dreheinrichtung und die mindestens eine Inspektionseinrichtung gemeinsam dazu ausgebildet, ein Inspizieren der Behälter von mehreren Seiten durchzuführen.

Beispielsweise können die Dreheinrichtungen dazu ausgebildet sein, den Behälter beim Erreichen der Inspektionseinrichtung, insbesondere vor einer Bilderfassungseinrichtung der Inspektionseinrichtung, zu drehen. So kann die Inspektionseinrichtung, insbesondere die Bilderfassungseinrichtung hiervon, den Behälter von mehreren Seiten inspizieren.

Alternativ und ebenfalls beispielsweise können zumindest eine vordere und eine hintere Inspektionseinrichtung vorgesehen sein. Dabei ist die Dreheinrichtung dazu ausgebildet, nach dem Passieren der vorderen Inspektionseinrichtung und vor dem Passieren der hinteren Inspektionseinrichtung, den Behälter zu drehen. Somit kann die hintere Inspektionseinrichtung eine andere Seite des Behälters inspizieren als die vordere Inspektionseinrichtung, und zwar obwohl beide Inspektionseinrichtungen bauraumoptimiert auf einer gemeinsam Seite angeordnet sein können.

Lediglich beispielsweise kann die vordere Inspektionseinrichtung eine erste Seite des Behälters inspizieren und die hintere Inspektionseinrichtung eine um 180° gedrehte, also gegenüberliegende Seite des Behälters inspizieren.

Gemäß einer vorteilhaften Weiterbildung der Erfindung weist der Abführungsabschnitt mindestens eine Sortier- oder Ausschleuseinrichtung zum Aussortieren von Behältern auf.

Die Sortier- oder Ausschleuseinrichtung ist insbesondere dazu ausgebildet, Behälter aus dem Produktionsprozess, also dem Behälter-Bewegungspfad, auszusortieren bzw. auszuschleusen.

Beispielsweise kann das Ausschleusen eines Behälters durch die Inspektionseinrichtung ausgelöst werden. Insbesondere kann das Ausschleusen eines Behälters dann ausgelöst, wenn die Inspektionseinrichtung eine Abweichung von einem Sollzustand feststellt. Dadurch können beispielsweise Behälter mit fehlerhaft aufgebrachten Etiketten oder falschen Füllständen aussortiert werden.

Weiterhin beispielsweise kann das Ausschleusen eines Behälters auch zum Inspizieren des Behälters erfolgen. Hierbei kann das Inspizieren vorzugsweise mittels der Inspektionseinrichtung erfolgen.

Bei einer vorteilhaften Weiterbildung der Erfindung weist die Behälterbehandlungsanlage eine Zuordnungseinrichtung auf oder ist mit einer Zuordnungseinrichtung verbindbar ausgebildet. Die Zuordnungseinrichtung ist dazu ausgebildet, einer, vorzugsweise jeder, zweiten Halteeinrichtung für einen Umlauf der Transportvorrichtung eine der ersten Halteeinrichtungen zuzuordnen.

Bei der Zuordnungseinrichtung kann es sich um eine Recheneinrichtung handeln. Die Transportvorrichtung ist hierbei endlos umlaufend ausgebildet. Dabei sind die zweiten Halteeinrichtungen nach genau einen Umlauf der Transportvorrichtung wieder an derselben Stelle angeordnet. Pro Umlauf übernimmt eine zweite Halteeinrichtung genau einen Behälter von einer ersten Halteeinrichtung. Somit ist für einen Umlauf der Transportvorrichtung einer zweiten Halteeinrichtung genau eine zugehörige erste Halteeinrichtung zuordenbar.

Da die Behälter von den ersten Halteeinrichtungen und den zweiten Halteeinrichtungen jeweils separat gehalten werden und einzeln übergeben bzw. übernommen werden, kann anhand derjenigen zweiten Halteeinrichtung, die einen Behälter hält, also bestimmt werden, welche der ersten Halteeinrichtungen den Behälter gehalten halt.

So kann der Behälter einer ersten Halteeinrichtung zugeordnet werden. Insbesondere kann ein Behälter auch dann noch direkt einer ersten Halteeinrichtung zugeordnet werden, wenn der Behälter sich nicht mehr im Behandlungsabschnitt, sondern bereits in dem Abführungsabschnitt befindet.

Im Gegensatz hierzu wäre es bei einer als Förderband ausgebildeten Transportvorrichtung im Abführungsabschnitt nicht einfach möglich, einen sicheren Rückschluss auf die gesuchte erste Halteeinrichtung zu ziehen. Hierfür wären aufwändige Behälterverfolgungssysteme mit Zeiterfassung, Kameras und/oder Sensoren nötig.

Die Behandlungsvorrichtung kann eine Vielzahl von vorzugsweise zumindest im Wesentlichen baugleichen Behandlungseinrichtungen aufweisen, die die Behälter behandeln. Lediglich beispielsweise kann ein Füller eine Vielzahl von Füllorganen zum Befüllen von Behältern aufweisen. Weiterhin beispielsweise kann eine Etikettiermaschine eine Vielzahl von Etikett-Andrückelementen zum Andrücken von Etiketten auf Behälter aufweisen. Die einzelnen Behandlungseinrichtungen, beispielsweise Füllorgane oder Etikett-Andrückelemente, sind üblicherweise jeweils einer ersten Halteeinrichtung zugeordnet. Daher ist es auch möglich, basierend auf der zweiten Halteeinrichtung zuzuordnen, welche der Behandlungseinrichtungen bei einer Vielzahl von Behandlungseinrichtungen den gesuchten Behälter behandelt hat.

Allgemein kann somit eine einfache Qualitätskontrolle und -anpassung erfolgen. Im Einzelnen kann ohne aufwendige Behälterverfolgung bestimmt werden, welchen Weg ein Behälter abgelaufen ist. So werden defekte Behandlungseinrichtungen, wie beispielsweise Füllorgane und dergleichen schnell ausfindig gemacht.

Selbstverständlich lässt sich das beschriebene Prinzip gleichermaßen auch bei einem Behandlungsabschnitt mit mehreren hintereinander angeordneten Behandlungsvorrichtungen durchführen.

Um dies zu verdeutlichen wird angenommen, dass eine zweite Behandlungsvorrichtung dritte Halteeinrichtungen zum separaten Halten von Behältern aufweist und vor der ersten Behandlungsvorrichtung ausgebildet.

Dann ist die Zuordnungseinrichtung dazu ausgebildet, einer, vorzugsweise jeder, zweiten Halteeinrichtung für einen Umlauf der Transportvorrichtung eine der ersten Halteeinrichtungen und eine der dritten Halteeinrichtungen zuzuordnen.

Gemäß einer vorteilhaften Weiterbildung der Erfindung umfasst die Behälterbehandlungsvorrichtung einen Rinser und/oder eine Etikettiermaschine und/oder einen Füller und/oder einen Verschließer.

Ferner wird die Aufgabe mittels eines Verfahrens zum Behandeln von Behältern, insbesondere in einer der vorgenannten Behälterbehandlungsanlagen gelöst. Dabei weist das Verfahren folgende Schritte auf: Befördern von Behältern durch einen Behandlungsabschnitt mit mindestens einer Behandlungsvorrichtung mittels einer Vielzahl von ersten Halteeinrichtungen, die dazu ausgebildet sind, die Behälter einzeln zu halten; Einzelnes Übergeben von behandelten Behältern von den ersten Halteeinrichtungen an zweite Halteeinrichtungen, die dazu ausgebildet sind, die Behälter einzeln zu halten; Befördern von behandelten Behältern durch einen Abführungsabschnitt mittels einer Transportvorrichtung, die die zweiten Halteeinrichtungen aufweist; und Inspizieren von behandelten Behältern in dem Abführungsabschnitt.

Gemäß einer vorteilhaften Weiterbildung der Erfindung weist das Verfahren ferner folgenden Schritt auf: Zuordnen einer ersten Halteeinrichtung zu einer zweiten Halteeinrichtung, wobei die Zuordnung für einen Umlauf der Transportvorrichtung aufrechterhalten wird.

Da es sich bei der im Verfahren verwendeten Behälterbehandlungsanlage um eine der bereits beschriebenen Behälterbehandlungsanlage handeln kann, sind hier sämtliche einzelne Aspekte und Vorteile der einzelnen Behälterbehandlungsanlagen übertragbar.

### Kurze Beschreibung der Zeichnungen

Die oben beschriebenen, unterschiedlichen und beispielhaften Merkmale können erfindungsgemäß miteinander kombiniert werden, soweit dies technisch sinnvoll ist. Weitere Merkmale, Vorteile und Ausführungsformen der Erfindung ergeben sich aus der nachfolgenden Beschreibung eines Ausführungsbeispiels und anhand der Figur.

Die zur Erläuterung des Ausführungsbeispiels verwendete Figur zeigt:

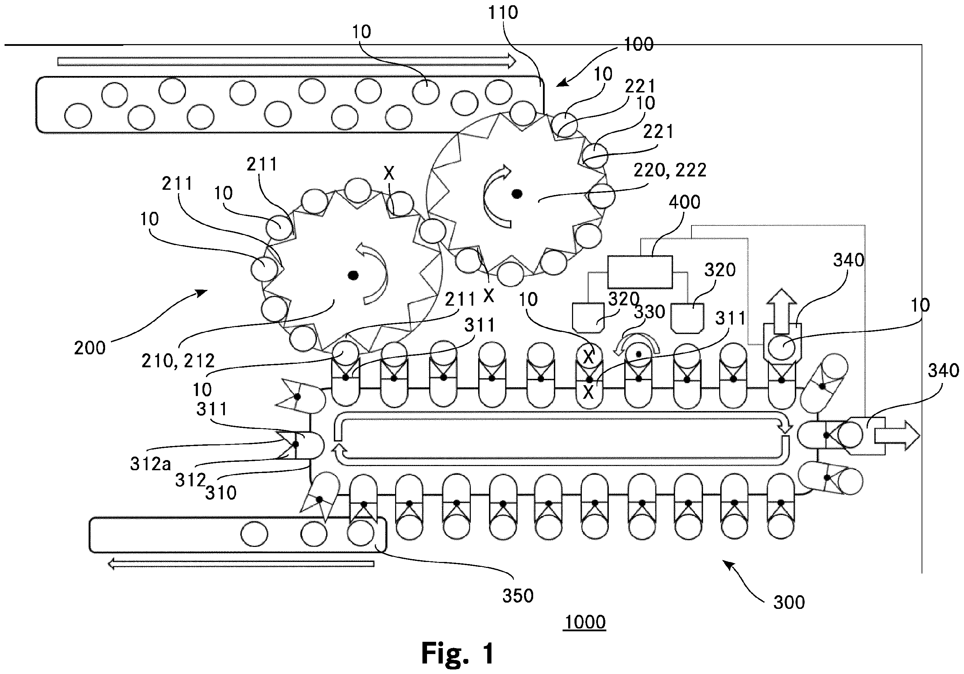

- Fig. 1: eine schematische Darstellung einer Behälterbehandlungsanlage gemäß der vorliegenden Erfindung.

### Wege zur Ausführung der Erfindung

Fig. 1 zeigt eine schematische Darstellung einer Behälterbehandlungsanlage 1000 gemäß der vorliegenden Erfindung.

Die Behälterbehandlungsanlage 1000 weist hierbei drei Abschnitte auf. Die Behälterbehandlungsanlage 1000 weist einen Zuführungsabschnitt 100, einen Behandlungsabschnitt 200 und einen Abführungsabschnitt 300 auf.

Der Zuführungsabschnitt 100 ist dazu ausgebildet, dem Behandlungsabschnitt 200 Behälter 10 zuzuführen. Der Behandlungsabschnitt 200 ist dazu ausgebildet, eine Behandlung der Behälter 10 durchzuführen. Hierzu weist der Behandlungsabschnitt 200 zwei Behälterbehandlungsvorrichtungen 210, 220 auf. Der Abführungsabschnitt 300 ist dazu ausgebildet, behandelte Behälter 10 von dem Behandlungsabschnitt 200 abzuführen.

Der Zuführungsabschnitt 100 weist eine Transportvorrichtung 110 auf, mittels derer eine Vielzahl von Behälter 10 transportiert werden. Bei der Transportvorrichtung 110 kann es sich insbesondere um ein Förderband handeln, auf dem die Behälter 10 unsortiert zu dem Behandlungsabschnitt 200 geführt werden.

Der Behandlungsabschnitt 200 weist in der in Fig. 1 dargestellten Ausführung exemplarisch die zwei Behälterbehandlungsvorrichtungen 210, 220 auf. Die beiden Behälterbehandlungsvorrichtungen 210, 220 sind weiterhin exemplarisch als Transportsterne 212, 222 ausgebildet. Wie dargestellt sind die beiden Transportsterne 212, 222 um eine vertikale Sternachse rotierbar ausgebildet.

Die Behälterbehandlungsvorrichtung 210 weist eine Vielzahl von erste Halteeinrichtungen 211 auf. Die ersten Halteeinrichtungen 211 sind hierbei am Umfang des Transportstern 212 verteilt ausgebildet. Wie ebenfalls in der Fig. 1 zu erkennen, ist jede der ersten Halteeinrichtungen 211 zum separaten Halten von genau einem Behälter 10 ausgebildet. An jeder der ersten Halteeinrichtungen 211 kann eine nicht dargestellt Behandlungseinrichtung, beispielsweise ein Verschließeinheit, angeordnet sein.

Ebenso weist die Behälterbehandlungsvorrichtung 220 eine Vielzahl von dritten Halteeinrichtungen 221 auf. Die dritten Halteeinrichtung 221 sind hierbei ebenfalls am Umfang des Transportsterns 222 verteilt ausgebildet und zum separaten Halten von genau einem Behälter 10 ausgebildet. An jeder der dritten Halteeinrichtungen 221 kann eine nicht dargestellt Behandlungseinrichtung, beispielsweise ein Füllorgan, angeordnet sein.

Wie in der Fig. 1 erkennbar, werden die Behälter 10 einzeln und getrennt voneinander durch den Behandlungsabschnitt 200, also die beiden Behälterbehandlungsvorrichtungen 210, 220 transportiert.

Die Behälterbehandlungsvorrichtung 210 übergibt die Behälter 10 einzeln an den Abführungsabschnitt 300 bzw. die Transportvorrichtung 310. Der Abführungsabschnitt 300 nimmt die Behälter 10 einzeln entgegen. Hierzu weist die Transportvorrichtung 310 eine Vielzahl von zweiten Halteeinrichtungen 311 auf.

Die zweiten Halteeinrichtungen 311 weisen, wie in der Fig. 1 angedeutet, beispielsweise Greiferelemente 312 mit zugehörigen Greiferflächen 312a auf. Somit können die Behälter 10 einfach gegriffen werden.

Die zweiten Halteeinrichtungen 311 sind dazu ausgebildet, die Behälter 10 separat zu halten und einzeln durch den Abführungsabschnitt 300 zu transportieren.

Die zweiten Halteeinrichtungen 311 transportieren die Behälter 10 an Inspektionseinrichtungen 320 vorbei, an denen die Behälter 10 inspiziert werden können.

Weiterhin transportieren die zweite Halteeinrichtungen 311 die Behälter 10 an Sortier- oder Ausschleuseinrichtungen 340 entlang, an denen die Behälter 10 aussortiert werden können.

Am Ende werden die Behälter 10 mittels der zweiten Halteeinrichtungen 311 zu einer Ausleiteinrichtung 350 transportiert. An der Ausleiteinrichtung 350 werden die Behälter 10 ausgeleitet. Beispielsweise werden die Behälter 10 dann zu einer Verpackungsstation geleitet.

Der Abführungsabschnitt 300 kann ferner mindestens eine hier schematisch angedeutete Dreheinrichtung 330 aufweisen. Die Dreheinrichtung 330 ist dazu ausgebildet, Behälter 10 um eine Drehachse zu drehen. Hierdurch kann der Behälter 10 von mehrere Seiten inspiziert werden. Beispielsweise wird der Behälter 10 an der ersten Inspektionseinrichtung 320 von vorne und dann nach einer Drehung um 180° mittels der Dreheinrichtung 330 an der zweiten Inspektionseinrichtung 320 von hinten inspiziert.

Die Transportvorrichtung 310 ist endlos umlaufen ausgebildet. Dabei bewegen sich die zweiten Halteeinrichtungen 311 umlaufend entlang einer Bahn. Nach einem Durchlauf bzw. Umlauf nimmt eine zweite Halteeinrichtung 311 einen neuen Behälter 10 auf. Das bedeutet auch, dass die Zuordnung eines Behälters 10 zu einer zweiten Halteeinrichtung 311 für einen Umlauf fest definiert ist.

Der Abführungsabschnitt 300 weist eine hier schematisch gezeigte Zuordnungseinrichtung 400 auf oder ist mit der Zuordnungseinrichtung 400 verbunden.

Die Zuordnungseinrichtung 400 ist dazu ausgebildet, einer zweiten Halteeinrichtung 311 für einen Umlauf der Transportvorrichtung 310 eine der ersten Halteeinrichtungen 211 und eine der dritten Halteeinrichtungen 221 zuzuordnen. Hierdurch kann einem an einer Inspektionseinrichtung 320 inspizierten Behälter 10 auch diejenige erste Halteeinrichtung 211 und diejenige dritte Halteeinrichtung 221 zugeordnet werden, die denselben Behälter 10 in der Behälterbehandlungsvorrichtung 210 und der Behälterbehandlungsvorrichtung 220 gehalten haben. Dadurch lässt sich auch auf die Behandlungseinheit schließen, die den Behälter 10 behandelt hat.

Die einfache Zuordnung ist insbesondere deswegen möglich, da die Behälter 10 durchgehend getrennt durch den Behandlungsabschnitt 200 und den Abführungsabschnitt 300 bewegt werden. So können beispielsweise dem Behälter 10 an der vorderen Inspektionseinrichtung 320 aufgrund der den Behälter 10 haltenden zweiten Halteeinrichtung 311 einfach die zugehörige erste Halteeinrichtung 211 und die zugehörige dritte Halteeinrichtung 221 zugeordnet werden. Zum einfacheren Verständnis sind die entsprechenden Elemente in der Fig. 1 mit einem X gekennzeichnet.

Es versteht sich, dass bei der vorliegenden Erfindung ein Zusammenhang zwischen einerseits Merkmalen besteht, die im Zusammenhang mit Verfahrensschritten beschrieben wurden, sowie andererseits Merkmalen, die im Zusammenhang mit entsprechenden Vorrichtungen beschrieben wurden. Somit sind beschriebene Verfahrensmerkmale auch als zur Erfindung gehörige Vorrichtungsmerkmale - und umgekehrt - anzusehen, selbst wenn dies nicht explizit erwähnt wurde.

Es ist festzuhalten, dass die unter Bezug auf einzelne Ausführungsformen bzw. -varianten beschriebenen Merkmale der Erfindung, wie beispielsweise Art und Ausgestaltung der einzelnen Komponenten sowie deren genaue Dimensionierung und räumliche Anordnung auch bei anderen Ausführungsformen vorhanden sein können, außer wenn es anders angegeben ist oder sich aus technischen Gründen von selbst verbietet. Von derartigen, in Kombination beschriebenen Merkmalen einzelner Ausführungsformen müssen außerdem nicht notwendigerweise alle Merkmale in einer betreffenden Ausführungsform realisiert sein.

### Bezugszeichenliste

- 1000: Behälterbehandlungsanlage

- 100: Zuführungsabschnitt
- 110: Transportvorrichtung (des Zuführungsabschnitts)

- 200: Behandlungsabschnitt
- 210: Behälterbehandlungsvorrichtung
- 211: Erste Halteeinrichtung
- 212: Transportstern

- 220: Behälterbehandlungsvorrichtung
- 221: Dritte Halteeinrichtung
- 222: Transportstern

- 300: Abführungsabschnitt
- 310: Transportvorrichtung
- 311: Zweite Halteeinrichtung
- 312: Greiferelement
- 312a: Greiferflächen

- 320: Inspektionseinrichtung

- 330: Dreheinrichtung
- 340: Sortier- oder Ausschleuseinrichtung
- 350: Ausleiteinrichtung

- 400: Zuordnungseinrichtung

- 10: Behälter

## Patentansprüche

1. Behälterbehandlungsanlage (1000) mit mehreren aufeinanderfolgenden Anlageabschnitten (100, 200, 300), wobei die Behälterbehandlungsanlage (1000) einen Behandlungsabschnitt (200) zum Behandeln von Behältern (10) und einen Abführungsabschnitt (300) zum Abführen der Behälter (10) von dem Behandlungsabschnitt (200) aufweist, wobei der Behandlungsabschnitt (200) mindestens eine Behälterbehandlungsvorrichtung (210) aufweist, wobei die mindestens eine Behälterbehandlungsvorrichtung (210) eine Vielzahl von ersten Halteeinrichtungen (211) zum separaten Halten von einzelnen Behältern (10) aufweist, **dadurch gekennzeichnet, dass** der Abführungsabschnitt (300) eine Transportvorrichtung (310) aufweist, die eine Vielzahl von zweiten Halteeinrichtungen (311) zum separaten Halten von einzelnen Behältern (10) aufweist, wobei die zweiten Halteeinrichtungen (311) dazu ausgebildet sind, einzelne Behälter (10) von der Vielzahl der ersten Halteeinrichtungen (211) separat zu übernehmen, und dass der Abführungsabschnitt (300) mindestens eine Inspektionseinrichtung (320) aufweist.

2. Behälterbehandlungsanlage nach Anspruch 1, wobei die Behälterbehandlungsanlage (1000) einen Zuführungsabschnitt (100) zum Zuführen von Behältern (10) zu dem Behandlungsabschnitt (200) aufweist.

3. Behälterbehandlungsanlage (1000) nach Anspruch 1 oder 2, wobei die mindestens eine Behälterbehandlungsvorrichtung (210) einen Transportstern (212) aufweist, der um eine vertikale Sternachse rotierbar ist und am Umfang verteilt die Vielzahl von ersten Halteeinrichtungen (211) aufweist.

4. Behälterbehandlungsanlage (1000) nach einem der vorherigen Ansprüche, wobei die Transportvorrichtung (310) derart endlos umlaufend ausgebildet ist, dass die zweiten Halteeinrichtungen (311) entlang einer Bahn bewegt werden.

5. Behälterbehandlungsanlage (1000) nach einem der vorherigen Ansprüche, wobei die zweiten Halteeinrichtungen (311) jeweils mindestens ein Greiferelement (312) aufweisen, das Greiferflächen (312a) zum Greifen genau eines Behälters (10) aufweist, wobei das Greiferelement (312) zwischen einer geschlossenen, den jeweiligen Behälter (10) haltenden Stellung und einer geöffneten, den Behälter (10) freigebenden Stellung bewegbar ausgebildet ist.

6. Behälterbehandlungsanlage (1000) nach einem der vorherigen Ansprüche, wobei die ersten Halteeinrichtungen (211) und die zweiten Halteeinrichtungen (311) derart ausgebildet sind, dass die Behälter (10) beim Durchlaufen des Behandlungsabschnitts (200) und des Abführungsabschnitts (300) auf zumindest im Wesentlichen der gleichen Höhe gehalten werden.

7. Behälterbehandlungsanlage (1000) gemäß einem der vorherigen Ansprüche, wobei der Abführungsabschnitt (300) mindestens eine Dreheinrichtung (330) aufweist, die dazu ausgebildet ist, gehaltenen Behälter (10) um eine Drehachse zu drehen.

8. Behälterbehandlungsanlage (1000) nach Anspruch 7, wobei die mindestens eine Dreheinrichtung (330) und die mindestens eine Inspektionseinrichtung (320) gemeinsam dazu ausgebildet sind, ein Inspizieren der Behälter (10) von mehreren Seiten durchzuführen.

9. Behälterbehandlungsanlage (1000) nach einem der vorherigen Ansprüche, wobei der Abführungsabschnitt (300) mindestens eine Sortier- oder Ausschleuseinrichtung (340) zum Aussortieren von Behältern (10) aufweist.

10. Behälterbehandlungsanlage (1000) nach einem der vorherigen Ansprüche, wobei die Behälterbehandlungsanlage (1000) eine Zuordnungseinrichtung (400) aufweist oder mit einer Zuordnungseinrichtung (400) verbindbar ist, die dazu ausgebildet ist, einer zweiten Halteeinrichtung (311) für einen Umlauf der Transportvorrichtung (310) eine der ersten Halteeinrichtungen (211) zuzuordnen.

11. Behälterbehandlungsanlage (1000) nach einem der vorherigen Ansprüche, wobei die Behälterbehandlungsvorrichtung (220) einen Rinser und/oder eine Etikettiermaschine und/oder einen Füller und/oder einen Verschließer umfasst.

12. Verfahren zum Behandeln von Behältern (10), insbesondere in einer Behälterbehandlungsanlage (1000) nach einem der vorherigen Ansprüche, wobei das Verfahren folgende Schritte aufweist:
Befördern von Behältern (10) durch einen Behandlungsabschnitt (200) mit mindestens einer Behälterbehandlungsvorrichtung (210) mittels einer Vielzahl von ersten Halteeinrichtungen (211), die dazu ausgebildet sind, die Behälter (10) einzeln zu halten;
Einzelnes Übergeben von behandelten Behältern (10) von den ersten Halteeinrichtungen (211) an zweite Halteeinrichtungen (311), die dazu ausgebildet sind, die Behälter (10) einzeln zu halten;
Befördern von behandelten Behältern (10) durch einen Abführungsabschnitt (300) mittels einer Transportvorrichtung (310), die die zweiten Halteeinrichtungen (311) aufweist; und
Inspizieren von behandelten Behältern (10) in dem Abführungsabschnitt (300).

13. Verfahren zum Behandeln von Behältern (10) nach Anspruch 12, wobei das Verfahren ferner folgenden Schritt aufweist:
Zuordnen einer ersten Halteeinrichtung (211) zu einer zweiten Halteeinrichtung (311), wobei die Zuordnung für einen Umlauf der Transportvorrichtung (310) aufrechterhalten wird.
